# DEMANDE DE BREVET EUROPEEN

(11) **EP 2 441 603 A1**
(43) Date de publication de la demande: **18.04.2012**
(21) Numéro de dépôt: 11306292.1
(22) Date de dépôt: 06.10.2011
(51) Int. Cl.: B60G 7/00, B60G 21/05

(54) **Bras d'essieu de véhicule automobile et procédé de réalisation d'un tel bras d'essieu**

(30) Priorité: 15.10.2010 FR 1058410
(71) Demandeur: Renault S.A.S., 92100 Boulogne-Billancourt (FR)
(72) Inventeur: Bernard, Sébastien, 72190 COULAINES (FR); Riffier, Bruno, 72210 FILLE SUR SARTHE (FR)

(57) **Abrégé**

Bras (4) d'essieu de véhicule automobile, le bras d'essieu étant d'un premier type, caractérisé en ce qu'il comprend une première partie de bras présentant un premier moyen de fixation (123) destiné à la fixation d'une deuxième partie de bras (12).

## Description

La présente invention se rapporte à un bras d'un essieu de véhicule automobile. L'invention se rapporte aussi à un essieu de véhicule automobile comprenant un tel bras, en particulier deux tels bras. L'invention se rapporte encore à une structure de caisse de véhicule automobile comprenant un tel essieu ou un tel bras. L'invention se rapporte enfin un véhicule automobile comprenant un tel bras, un tel essieu ou une telle structure de caisse. L'invention concerne également un procédé de fabrication d'un bras d'essieu.

Sur de nombreux véhicule automobile, un essieu, notamment l'essieu arrière, comprend deux bras liés mécaniquement en pivotement relativement à la structure de caisse du véhicule automobile, et s'étendant chacun au moins sensiblement longitudinalement de part et d'autre de la structure de caisse du véhicule automobile. Les bras sont de préférence liés à la structure de caisse dans leur partie avant et liés aux moyeux des roues dans leur partie arrière. Des moyens élastiques sont prévus pour rappeler chacun des bras vers une position de repos relativement à la structure de caisse. Par ailleurs, une traverse peut s'étendre transversalement pour lier les deux bras l'un à l'autre.

Une telle architecture impose de définir les géométries de bras propres à chaque type de véhicule de la gamme d'un constructeur automobile, c'est-à-dire que l'on peut rarement utiliser sur un premier type de véhicule des bras d'essieu prévus pour un deuxième type de véhicule. En outre, dans certains cas, il faut même prévoir plusieurs géométries de bras pour différentes variantes de véhicule à l'intérieur d'un même type de véhicule. En particulier, dans certains cas, il faut concevoir un nouveau bras d'essieu pour de faibles volumes de production de véhicules automobiles. Ceci conduit nécessairement à :
- des coûts de développement,
- des coûts d'outillage de production (il faut à ce propos produire deux variantes de bras: les bras droits et les bras gauches ; ceux-ci ayant en général des géométries symétriques), et
- des coûts de gestion de la diversité des bras, notamment sur les chaînes de montage.

Par ailleurs, il n'est pas souvent imaginable de pouvoir produire un deuxième type de bras d'essieu en modifiant les outillages de fabrication d'un premier type de bras d'essieu. Ceci est particulièrement le cas lorsque les premier et deuxième types de bras d'essieu ont des longueurs différentes.

Le but de l'invention est de fournir un bras d'essieu remédiant aux inconvénients mentionnés précédemment et améliorant les bras d'essieu connus de l'art antérieur. En particulier, l'invention propose un bras d'essieu simple et fiable convenant à différents types de véhicules nécessitant pourtant des bras d'essieu de géométries différentes.

Selon l'invention, le bras d'essieu de véhicule automobile comprend une première partie de bras présentant un premier moyen de fixation destiné à la fixation d'une deuxième partie de bras. Ce bras est d'un premier type.

Le premier moyen de fixation peut comprendre un alésage, notamment un alésage dont l'axe est au moins sensiblement parallèle à la direction longitudinale du bras.

Le premier moyen de fixation peut être agencé à l'extrémité arrière de la première partie du bras d'essieu.

Selon l'invention, un ensemble comprend un bras d'essieu de premier type défini précédemment et une deuxième partie de bras d'essieu, la deuxième partie de bras d'essieu présentant un deuxième moyen de fixation destiné à la fixation au bras d'essieu de premier type.

Le deuxième moyen de fixation peut comprendre un arbre destiné à coopérer avec le premier moyen de fixation du bras d'essieu de premier type, en particulier destiné à venir se loger dans le premier moyen de fixation du bras d'essieu de premier type.

La deuxième partie de bras d'essieu peut être obtenue par déformation plastique et/ou par usinage.

L'invention porte aussi sur un bras d'essieu d'un véhicule automobile, le bras d'essieu étant d'un deuxième type. Il comprend un ensemble défini précédemment et dans lequel un bras d'essieu de premier type et la deuxième partie de bras d'essieu sont assemblés.

L'invention porte aussi sur un procédé de réalisation d'un bras d'essieu d'un deuxième type à partir d'un bras d'essieu d'un premier type. Il est caractérisé en ce qu'il comprend les étapes suivantes :
- fournir le bras d'essieu du premier type selon l'une des revendications précédentes ;
- fournir une deuxième partie de bras d'essieu ;
- fixer le bras d'essieu du premier type à la deuxième partie de bras d'essieu.

L'étape « fixer le bras d'essieu du premier type à la deuxième partie de bras d'essieu » peut comprendre une étape de frettage et/ou d'emmanchement par serrage et/ou de collage et/ou de soudure.

L'invention porte aussi sur un bras d'essieu obtenu par la mise en oeuvre du procédé de réalisation défini précédemment.

L'invention porte aussi sur un essieu de véhicule automobile comprenant un bras d'essieu défini précédemment, en particulier deux bras d'essieu définis précédemment.

L'invention porte aussi sur une structure de caisse d'un véhicule automobile comprenant un bras d'essieu défini précédemment, en particulier deux bras d'essieu définis précédemment, ou comprenant un essieu défini précédemment.

L'invention porte encore sur un véhicule automobile comprenant un bras d'essieu défini précédemment, en particulier deux bras d'essieu définis précédemment, ou comprenant un essieu défini précédemment ou comprenant une structure de caisse définie précédemment.

Le dessin annexé représente, à titre d'exemple, un mode de réalisation d'un véhicule automobile comprenant un mode de réalisation d'un bras d'essieu selon l'invention.
La figure 1 est une vue schématique de dessus d'un mode de réalisation d'un véhicule automobile comprenant un mode de réalisation d'un bras d'essieu selon invention.
La figure 2 est une vue schématique de dessus du mode de réalisation du bras d'essieu utilisé dans une première application.
La figure 3 est une vue schématique de dessus du mode de réalisation du bras d'essieu utilisé dans une deuxième application.
La figure 4 est une vue en coupe partielle d'une première variante du mode de réalisation du bras d'essieu.
La figure 5 est une vue en coupe partielle d'une deuxième variante du mode de réalisation du bras d'essieu.

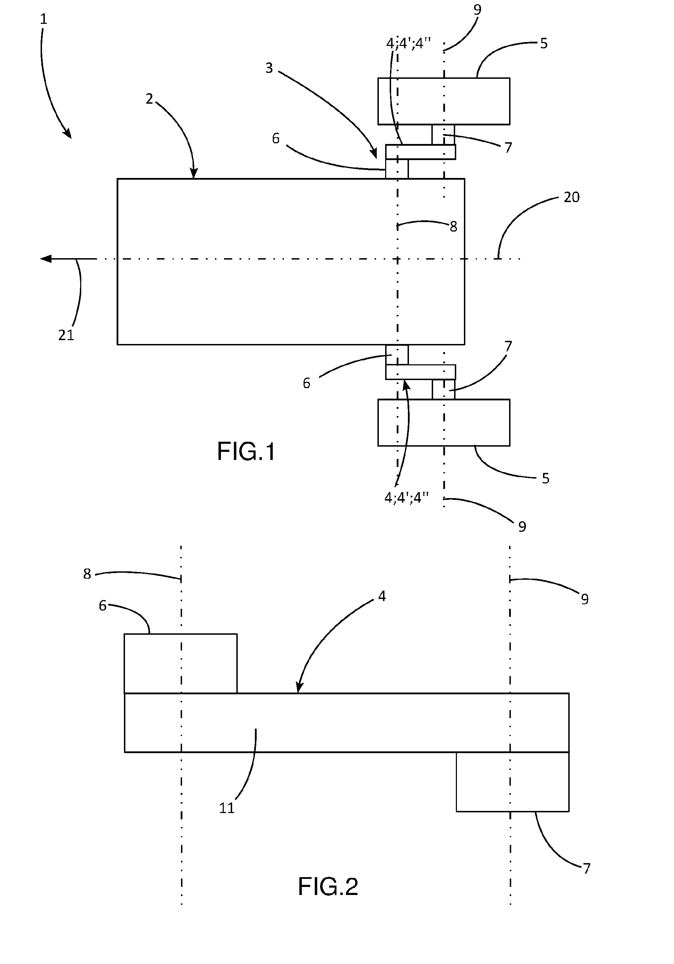

Un mode de réalisation de véhicule automobile 1 représenté à la figure 1 comprend une structure de caisse 2 sur laquelle est monté un essieu 3, notamment un essieu arrière. Le véhicule automobile présente un axe longitudinal 20 et se déplace en marche avant dans le sens de la flèche 21.

L'essieu arrière 3 est par exemple un essieu arrière du type souple. L'essieu comprend deux bras 4 ; 4' ; 4" liés mécaniquement en pivotement relativement à la structure de caisse du véhicule automobile via des paliers 6. Ces paliers permettent l'articulation des bras d'essieu autour d'un axe 8 transversal au véhicule automobile. Les paliers se trouvent par exemple à l'avant des bras d'essieu. Les bras d'essieu s'étendent chacun au moins sensiblement longitudinalement de part et d'autre de la structure de caisse du véhicule automobile. Les bras d'essieu sont en outre liés aux moyeux des roues 5 dans leur partie arrière selon un axe 9. Cette liaison se fait par exemple grâce à des chapes de tête d'essieu 7.

Avantageusement, l'essieu comprend les bras, les paliers et les chapes de tête d'essieu. Avantageusement, la structure de caisse comprend l'essieu.

Des moyens élastiques (non représentés) sont prévus pour rappeler chacun des bras vers une position de repos relativement à la structure de caisse. Par ailleurs, une traverse peut s'étendre transversalement pour lier les deux bras l'un à l'autre.

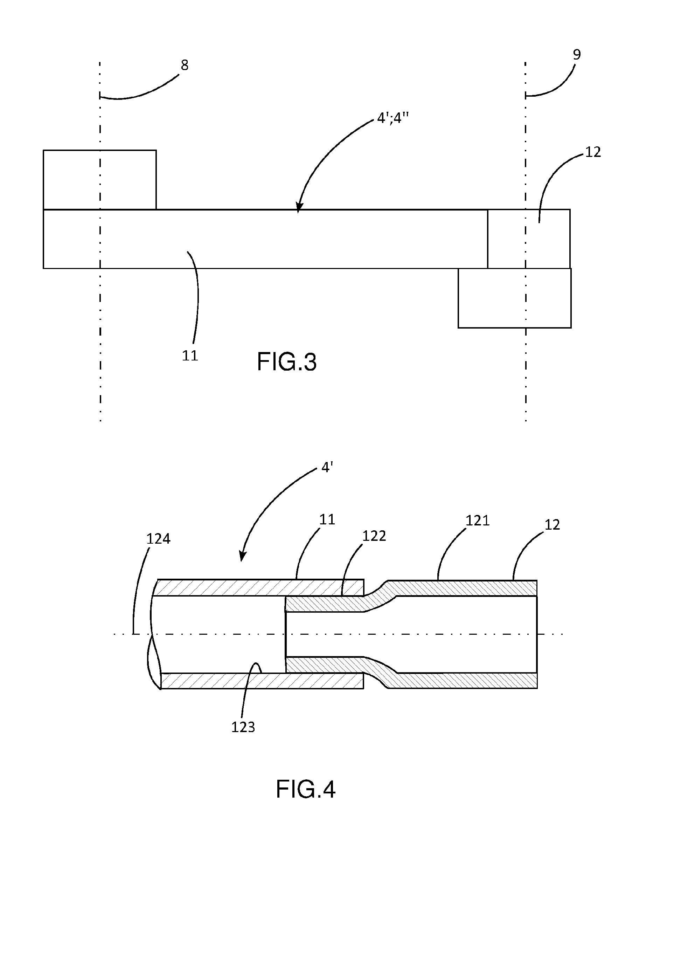

Des modes de réalisation de bras d'essieu de premier et deuxième types sont respectivement représentés aux figures 2 et 3.

Le bras d'essieu 4 de premier type comprend une première partie de bras 11. Le bras d'essieu, en particulier la première partie de bras, présente un premier moyen de fixation 123 destiné à la fixation d'une deuxième partie de bras 12. La deuxième partie de bras 12 ne fait pas partie du bras d'essieu de premier type, mais de la pièce comportant les moyens de liaison aux moyeux des roues.

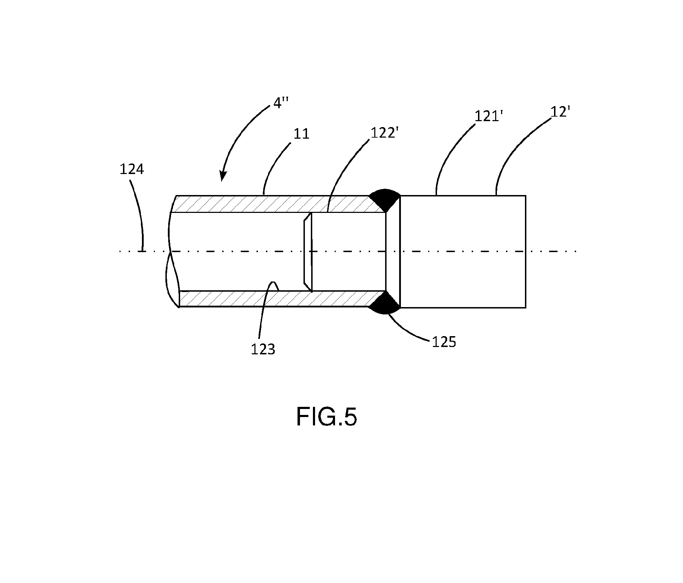

Comme représenté aux figures 4 et 5, le moyen de fixation comprend avantageusement un alésage 123, notamment un alésage dont l'axe 124 est au moins sensiblement parallèle à la direction longitudinale du bras.

Le moyen de fixation est de préférence agencé à distance de la liaison du bras au palier 6, notamment à l'extrémité distante de la liaison du bras au palier 6, en particulier à l'extrémité arrière du bras d'essieu.

Le bras d'essieu 4' ; 4" de deuxième type, représenté à la figure 3, comprend la première partie de bras 11 et une deuxième partie de bras 12'. La première partie de bras présente toujours le premier moyen de fixation 123 destiné à la fixation de la deuxième partie de bras 12'. La deuxième partie de bras d'essieu présente quant à elle un moyen de fixation 122' complémentaire destiné à la fixation au bras d'essieu de premier type, notamment à la première partie de bras d'essieu.

La deuxième partie de bras présente avantageusement la forme d'un manchon. Elle peut notamment être réalisée par une forme emboutie, par exemple un tube embouti 12 ou par une forme usinée, notamment un tube décolleté ou usiné.

La deuxième partie de bras peut avoir une forme cylindrique ou conique ou toute autre forme, afin de présenter des caractéristiques mécaniques spécifiques.

Le moyen de fixation est de préférence agencé à l'extrémité arrière du bras d'essieu. Il coopère de préférence avec un arbre 122', notamment un arbre épaulé, prévu sur la deuxième partie de bras 12'. Cet arbre est conformé de sorte à venir se loger dans le moyen de fixation de la première partie de bras d'essieu.

Cette deuxième partie de bras d'essieu comporte, à son autre extrémité, des moyens de liaison aux moyeux de roue, qui peuvent être similaires aux moyens évoqués pour un bras d'essieu de premier type, c'est-à-dire intégrant une portion 12 de bras, mais qui peuvent être différents, notamment sans présenter de portion de bras longitudinal, selon le type de véhicule pour lequel ils sont adaptés.

L'invention porte également sur un ensemble comprenant un bras d'essieu de premier type et la deuxième partie de bras d'essieu 12', avant que ce bras et cette deuxième partie de bras ne soient assemblés.

La deuxième partie de bras d'essieu peut être obtenue grâce à différentes techniques. Elle peut être obtenue par déformation plastique comme représenté à la figure 4. Elle peut également être obtenue par usinage comme représente à la figure 5. Elle peut encore être obtenue en utilisant une étape de déformation plastique et une étape d'usinage. De même, la première partie de bras d'essieu peut être obtenue grâce à différentes techniques. Elle peut être obtenue par déformation plastique. Elle peut également être obtenue par usinage. Elle peut encore être obtenue en utilisant une étape de déformation plastique et une étape d'usinage.

Pour réaliser un bras d'essieu du deuxième type, on doit donc assembler la première partie de bras et la deuxième partie de bras. Cet assemblage peut être réalisé par tout moyen, il peut notamment comprendre une étape de frettage et/ou une étape d'emmanchement par serrage et/ou une étape de collage et/ou une étape de soudure, notamment en réalisant un cordon de soudure 125 entre les première et deuxième parties.

Comme vu précédemment, la chape de tête d'essieu 7 est ensuite montée sur le bras d'essieu. Sur un bras d'essieu du premier type, la chape de tête d'essieu est par exemple montée au niveau de l'extrémité du bras, notamment l'extrémité distante relativement au palier 6. Sur un bras d'essieu du deuxième type, la chape de tête d'essieu peut être montée au niveau de l'extrémité du bras, c'est-à-dire sur une surface extérieure 121' de la deuxième partie 12' de bras. Alternativement, sur un bras d'essieu de deuxième type, la chape de tête d'essieu peut être montée à cheval sur la première partie 11 de bras et sur la deuxième partie de bras 12'.

Un mode d'exécution d'un procédé de réalisation d'un bras d'essieu d'un deuxième type 4' à partir d'un bras d'essieu d'un premier type 4 est décrit ci-après.

Dans une première étape, on fournit un bras d'essieu du premier type, par exemple un bras d'essieu du premier type tel que décrit précédemment.

Dans une deuxième étape, on fournit une deuxième partie 12' de bras d'essieu, notamment une deuxième partie telle que décrite précédemment.

Dans une troisième étape, on fixe ou on assemble le bras d'essieu du premier type à la deuxième partie de bras d'essieu. Comme vu précédemment, l'assemblage peut être réalisé par tout moyen. Il peut notamment comprendre une étape de frettage et/ou une étape d'emmanchement par serrage et/ou une étape de collage et/ou une et de soudure.

On obtient ainsi un bras d'essieu du deuxième type.

Un mode de réalisation d'un essieu 3 selon invention comprend un bras d'essieu tel que décrit précédemment, en particulier deux bras d'essieu tels que décrits précédemment.

Un mode de réalisation d'une structure de caisse selon l'invention comprend un bras d'essieu tel que décrit précédemment, en particulier deux bras d'essieu tels que décrits précédemment ou comprend un essieu tel que décrit précédemment.

Un mode de réalisation de véhicule automobile selon l'invention comprend un bras d'essieu tel que décrit précédemment, en particulier deux bras d'essieu tels que décrits précédemment ou comprend un essieu tel que décrit précédemment ou comprend une structure de caisse telle que décrite précédemment.

Grâce à l'invention, on peut obtenir, à moindre coût, un bras d'essieu d'un premier type ayant de premières caractéristiques, notamment une première géométrie, et à monter sur un premier type de véhicule et un bras d'essieu d'un deuxième type ayant des deuxièmes caractéristiques, notamment une deuxième géométrie et à monter sur un deuxième type de véhicule, par le manchon ou portion de bras ou partie de bras rapporté. Dans l'exemple décrit précédemment, le bras d'essieu du deuxième type est plus long que le bras d'essieu du premier type. De plus, il est possible d'avoir des caractéristiques mécaniques, notamment des caractéristiques de rigidité ou de résistance mécanique différentes sur les bras du premier type et sur les bras du deuxième type. Pour ce faire, on peut utiliser des premières parties et des deuxièmes parties de bras ayant des épaisseurs différentes ou étant réalisées en matériaux différents. Sur un bras d'essieu de deuxième type tel que décrit précédemment, on peut réaliser un renfort local au niveau de la zone où la deuxième partie de bras d'essieu pénètre dans la première partie de bras d'essieu.

Selon l'invention, il est encore possible d'obtenir un bras d'essieu d'un troisième type en utilisant une deuxième partie de bras d'essieu différente de celle décrite précédemment.

Dans tout ce texte, le terme « au moins sensiblement » utilisé avec différents *adjectifs* signifie : *« adjectif* » ou « sensiblement *adjectif* », par exemple « au moins sensiblement perpendiculaire » signifie « perpendiculaire » ou « sensiblement perpendiculaire ».

## Revendications

1. Bras (4) d'essieu de véhicule automobile, le bras d'essieu étant d'un premier type, **caractérisé en ce qu'**il comprend une première partie de bras présentant un premier moyen de fixation (123) destiné à la fixation d'une deuxième partie de bras (12) et **en ce qu'**une chape de tête d'essieu (7) est montée sur ladite deuxième partie de bras (12).

2. Bras d'essieu selon la revendication précédente, **caractérisé en ce que** le premier moyen de fixation comprend un alésage (123), notamment un alésage dont l'axe est au moins sensiblement parallèle à la direction longitudinale du bras.

3. Bras d'essieu selon l'une des revendications précédentes, **caractérisé en ce que** le premier moyen de fixation est agencé à l'extrémité arrière de la première partie du bras d'essieu.

4. Ensemble comprenant un bras d'essieu de premier type selon l'une des revendications précédentes et une deuxième partie de bras d'essieu (12), la deuxième partie de bras d'essieu présentant un deuxième moyen de fixation (122 ; 122') destiné à la fixation au bras d'essieu de premier type.

5. Ensemble selon la revendication précédente, **caractérisé en ce que** le deuxième moyen de fixation comprend un arbre (122 ; 122') destiné à coopérer avec le premier moyen de fixation (123) du bras d'essieu de premier type, en particulier destiné à venir se loger dans le premier moyen de fixation (123) du bras d'essieu de premier type.

6. Ensemble selon la revendication 4 ou 5, **caractérisé en ce que** la deuxième partie de bras d'essieu est obtenue par déformation plastique et/ou par usinage.

7. Bras (4' ; 4") d'essieu d'un véhicule automobile, le bras d'essieu étant d'un deuxième type et **caractérisé en ce qu'**il comprend un ensemble selon l'une des revendications 4 à 6 et dans lequel le bras d'essieu de premier type et la deuxième partie de bras d'essieu sont assemblés.

8. Procédé de réalisation d'un bras d'essieu d'un deuxième type (4') à partir d'un bras d'essieu d'un premier type (4), **caractérisé en ce qu'**il comprend les étapes suivantes :
- fournir le bras d'essieu du premier type selon l'une des revendications précédentes ;
- fournir une deuxième partie (12) de bras d'essieu ;
- fixer le bras d'essieu du premier type à la deuxième partie de bras d'essieu.

9. Procédé de réalisation selon la revendication précédente, **caractérisé en ce que** l'étape « fixer le bras d'essieu du premier type à la deuxième partie de bras d'essieu » comprend une étape de frettage et/ou d'emmanchement par serrage et/ou de collage et/ou de soudure.

10. Procédé de réalisation selon l'une des revendications 8 ou 9, **caractérisé en ce qu'**il consiste, après l'étape de fixer le bras d'essieu du premier type à la deuxième partie de bras d'essieu, à monter une chape de tête d'essieu sur la deuxième partie de bras.

11. Bras d'essieu obtenu par la mise en oeuvre du procédé de réalisation selon l'une des revendications 8 à 10.

12. Essieu (3) de véhicule automobile comprenant un bras d'essieu selon l'une des revendications 1 à 3 ou 7 ou 11, en particulier deux bras d'essieu selon l'une des revendications 1 à 3 ou 7 ou 11.

13. Structure (2) de caisse d'un véhicule automobile (1) comprenant un bras d'essieu selon l'une des revendications 1 à 3 ou 7 ou 11, en particulier deux bras d'essieu selon l'une des revendications 1 à 3 ou 7 ou 11, ou comprenant un essieu (3) selon la revendication précédente.

14. Véhicule automobile (1) comprenant un bras d'essieu selon l'une des revendications 1 à 3 ou 7 ou 11, en particulier deux bras d'essieu selon l'une des revendications 1 à 3 ou 7 ou 11, ou comprenant un essieu selon la revendication 12 ou comprenant une structure de caisse selon la revendication 13.
